# FASCICULE DE BREVET EUROPEEN

(11) **EP 4 259 452 B1**
(45) Date de publication et mention de la délivrance du brevet: **07.08.2024**
(21) Numéro de dépôt: 21810682.1
(22) Date de dépôt: 03.11.2021
(51) Int. Cl.: B60B 7/00, B60B 19/10, B60B 3/10, B60B 7/04

(54) **INSERT A L'AERODYNAMIQUE OPTIMISEE POUR UNE ROUE DE VEHICULE**
OPTIMIERTER AERODYNAMISCHER EINSATZ FÜR EIN FAHRZEUGRAD
OPTIMIZED AERODYNAMIC INSERT FOR A VEHICLE WHEEL

(30) Priorité: 10.12.2020 FR 2012989
(43) Date de publication de la demande: 18.10.2023
(73) Titulaire: Stellantis Auto SAS, 78300 Poissy (FR)
(72) Inventeur: PALPACUER, Eric, 75013 PARIS (FR); MERAGHNI, Fodil, 57155 MARLY (FR); PELTIER, Laurent, 57645 NOUILLY (FR)
(86) Numéro de dépôt international: PCT/FR2021/051925
(87) Numéro de publication internationale: WO 2022/123129

(56) Documents cités:
- WO-A1-2012/107165
- WO-A1-2019/166715
- CN-A- 110 254 127
- FR-A1- 3 057 805
- FR-A1- 3 057 806
- FR-A1- 3 078 921
- JP-A- S61 244 601

## Description

La présente invention revendique la priorité de la demande française N°2012989 déposée le 10.12.2020.

La présente invention concerne un insert à l'aérodynamique optimisée pour une roue d'un véhicule automobile.

La présente invention concerne plus particulièrement un tel insert qui comprend un cadre destiné à être solidarisé dans une ouverture du voile de la roue et au moins une pale liée au cadre, la pale étant montée pivotante sur le cadre au moyen d'un support métallique à mémoire de forme configuré pour modifier l'orientation de ladite pale à partir d'une température critique prédéterminée, ladite pale et ledit support étant positionnés sur le cadre de telle sort à s'étend et à avoir un pivotement qui est orienté suivant une direction radiale du voile de la roue lorsque le dispositif est solidarisé dans ladite ouverture.

Il existe des enjoliveurs, dits « aérodynamiques », qui remplissent une fonction de style et offrent des caractéristiques aérodynamiques qui ne dégradent pas (ou quasiment pas) l'aérodynamisme de leur véhicule.

Cependant, ce type d'enjoliveur présente généralement des passages d'air de petite surface qui permettent par conséquent seulement une circulation d'une petite quantité d'air vers les moyens de freinage couplés à la jante de roue associée, ce qui de ce fait a une incidence négative sur le refroidissement de ces derniers.

Afin d'améliorer la situation, il a été proposé d'équiper les roues d'enjoliveurs aérodynamiques plus perfectionnés.

Tel est notamment le cas dans le document brevet FR-A1-3011769 qui divulgue une roue et un enjoliveur avec des pales.

La roue présente une jante cylindrique et un voile avec des ajourages radiaux formés par des rayons disposés radialement entre le moyeu central et le bord périphérique de la jante.

L'enjoliveur présente également des ajourages radiaux, formés par des pales présentant en particulier une section à profil spécifique aérodynamique, en « aile d'avion », qui sont disposées radialement entre la partie centrale de l'enjoliveur et son bord périphérique.

Cette disposition permet ainsi aux pales d'enjoliveur de dévier le flux d'air latéral de manière indirecte et de le canaliser au travers des ajourages radiaux du voile de la roue.

Toutefois, bien que les caractéristiques aérodynamiques de ces enjoliveurs perfectionnés dits également « à effet turbine », soient optimales et permettent notamment une réduction de la traînée aérodynamique et un gain de CO₂, les ajourages radiaux du voile ne présentent pas une surface optimale et limite par conséquent le flux d'air apte à refroidir les freins du véhicule.

Pour remédier à cet inconvénient, il est également possible d'utiliser des dispositifs de fermeture des ajourages du voile d'une jante d'une roue classique.

Tel est le cas du document de brevet publié DE-A1-102016004129 qui divulgue un dispositif de recouvrement d'ajourage de roue formé par des secteurs en éventails.

Ces secteurs sont au nombre de trois par ajourage et pivotent autour de la partie centrale de la roue pour fermer ou ouvrir l'ajourage correspondant.

Leur déplacement est en fait effectué par des actionneurs comprenant un alliage en mémoire de forme et qui fonctionne en fonction de la plage de température de la jante de la roue lors du déplacement vers l'avant de celle-ci.

Dans le cas présent, le déplacement des secteurs entre la position ouverte et la position fermée est déterminé par la température ambiante au système de freinage.

Ainsi, lorsque les secteurs de chaque ajourage sont fermés, le système de freinage est beaucoup moins ventilé ce qui conduit à une augmentation de la température de la région de la jante où se trouve les freins.

Puis, lorsque cette température atteint un certain seuil, les actionneurs à mémoire de forme entrainent le pivotement des secteurs autour du moyeu et du bord de la jante pour ouvrir les ajourages de la roue permettant ainsi au flux d'air de pénétrer vers l'intérieur de la roue et par conséquent de refroidir le système de freinage. Bien que ce type de dispositif permette d'améliorer l'aérodynamisme du véhicule par la fermeture des ajourages de la roue, il ne permet pas une ventilation simultanée du système de freinage.

De plus, sa mise en place nécessite une fixation sur la face interne de la roue, à l'arrière des rayons du voile, ce qui ne facilite pas un démontage facile et rapide en cas de dysfonctionnement ou de changement de roue. Un autre exemple d'insert pour roue avec pale pivotante est connu par WO 2019/166715 A1.

L'invention a pour objectif de pallier au moins un des inconvénients de l'état de la technique susmentionné.

Plus particulièrement, l'invention a pour objectif de fournir un enjoliveur ou un enjoliveur à pièces rapportées de type insert turbine, pour roue de véhicule automobile, qui permette d'optimiser l'aérodynamisme du véhicule tout en optimisant la thermique des freins, et ceci de manière simple et facile à mettre en oeuvre.

Le dispositif selon l'invention permet de remédier à cet inconvénient.

Il comporte en effet, selon l'invention, un insert pour une roue d'un véhicule automobile, comprenant un cadre destiné à être solidarisé dans une ouverture du voile de la roue et au moins une pale liée au cadre, la pale étant montée pivotante sur le cadre au moyen d'un support métallique à mémoire de forme configuré pour modifier l'orientation de ladite pale à partir d'une température critique prédéterminée, ladite pale et ledit support étant positionnés sur le cadre de telle sort à s'étend et à avoir un pivotement qui est orienté suivant une direction radiale du voile de la roue lorsque le dispositif est solidarisé dans ladite ouverture, les deux extrémités du support étant solidaires du cadre, s'étendant de part et d'autre de la pale et une partie centrale du support étant solidaire en rotation de la pale.

Selon une première caractéristique de l'invention, le support comporte une première partie préalablement déformée et adaptée pour reprendre sa forme d'origine une fois ladite température critique d'atteinte et une seconde partie configurée pour former un ressort de rappel s'opposant à la remise à sa forme initiale de la première partie une fois la température critique d'atteinte, la seconde partie du support formant une barre de torsion.

Bien entendu la force de rappel du ressort de rappel doit être calibrée pour ne pas empêcher la première partie du support de revenir dans sa forme d'origine, mais doit juste l'accompagner dans ces différents changements de formes pour avoir un mouvement amorti de la rotation de la pale.

Selon une seconde caractéristique de l'invention, lorsque l'insert est en rotation suivant la marche avant du véhicule, le support est configuré pour que, lorsque la température est inférieure à la température critique, orienter la pale de manière à générer un flux d'air dirigé de l'extérieure de la roue vers l'intérieur de la roue et pour une température supérieure ou égale à la température critique, orienter la pale de manière générer un flux d'air inverse.

Selon une troisième caractéristique de l'invention, la température critique est comprise entre 50°C et 70 °C, ladite température crtiique étant préférentiellement de 60 °C.

La présente invention concerne aussi une roue de véhicule qui comporte plusieurs ouvertures, chaque ouverture comportant un insert selon l'invention, ledit insert comportant au moins une des caractéristiques précédentes.

La présente invention concerne enfin un véhicule automobile comprenant plusieurs roues, chacune roue comportant plusieurs ouvertures, chaque ouverture comportant un insert selon l'invention, ledit insert comportant au moins une des caractéristiques précédentes.

Les dessins annexés illustrent l'invention :
[Fig.1] représente une vue en perspective d'un insert selon l'invention, avant montage sur une roue.
[Fig.2] représente une vue en perspective d'un ensemble d'inserts après montage sur cette même roue.
[Fig.3] représente une vue en perspective d'un cadre et d'un support de l'insert selon l'invention.
[Fig.4a] représente une vue partielle, en perspective, de la roue comportant un insert selon l'invention, dans une première orientation d'une pale de l'insert.
[Fig.4b] représente une vue partielle en perspective de la roue qui comporte un insert selon l'invention, dans une seconde orientation de ladite pale.

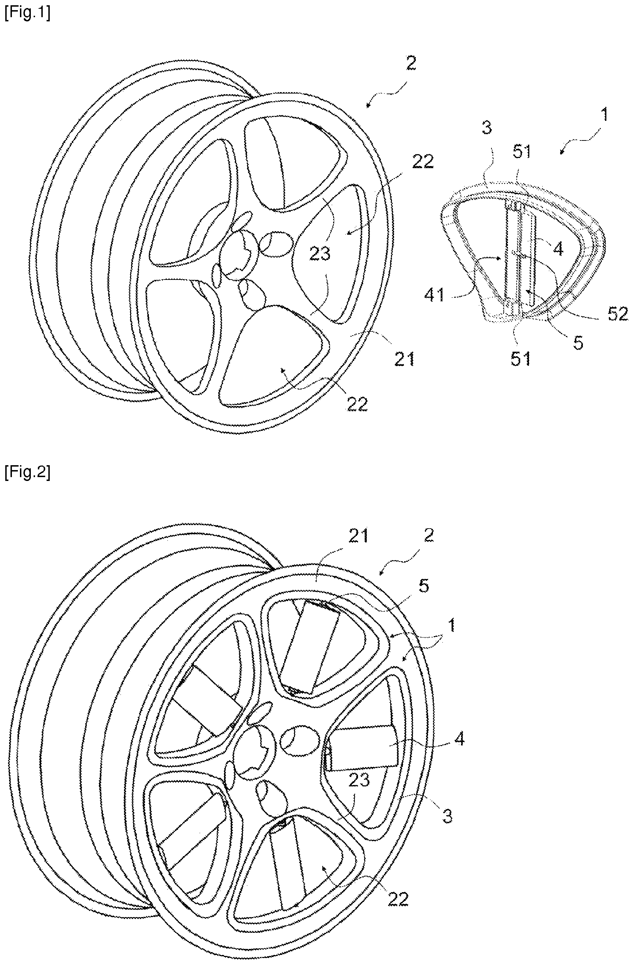

Les figures 1 et 2 représentent des vues en perspective d'un insert 1 selon l'invention, avant montage sur une roue 2 et d'un ensemble d'inserts 1 après montage sur cette même roue 2.

L'insert 1 comporte un cadre 3 soutenant une pale 4 par l'intermédiaire d'un supports 5 qui est formé par un élément métallique à mémoire de forme.

Le support 5 est adapté pour permettre à la pale 4 de pivoter sur le cadre 3, de telle manière que l'inclinaison de la pale 4 puisse changer automatiquement en fonction de la température, comme plus particulièrement expliqué dans la suite de la description détaillée.

La roue 2 comporte un voile 21 dans lequel sont formées des ouvertures 22, avec les parties du voile 21 qui sont positionnées entre les ouvertures 22 et qui forment des branches 23.

Dans l'exemple de mode de réalisation tel que représenté, la roue 2 comporte cinq branches 23 et cinq ouvertures 22, avec un insert 1 qui est positionné dans chacune des cinq ouvertures 22.

La pale 4 et le support 5 de chaque insert 1 sont orientés dans le cadre 3 de telle sort que lorsque les inserts 1 sont positionnés dans les ouvertures 22, le pivotement de la pale 4 est orientée suivant une direction radiale du voile 21 de la roue 2, la pale 4 étant elle-même orientée pour s'étendre selon sa plus longue longueur suivant une direction radiale du voile 21 de la roue 2.

Deux extrémités 51 du support 5 sont solidaires du cadre 3, s'étendant de part et d'autre de la pale 4 prise dans sa plus longue longueur, avec une partie centrale 52 du support 5 qui est solidaire en rotation d'une partie centrale 41 de la pale 4.

Des clips de maintien permettent de solidariser la pale 4 sur le support 5, mais ces clips sont adaptés pour laisser le support 5 pivoter librement sans modifier la rotation de la pale 4 en dehors de la partie centrale 52 du support 5.

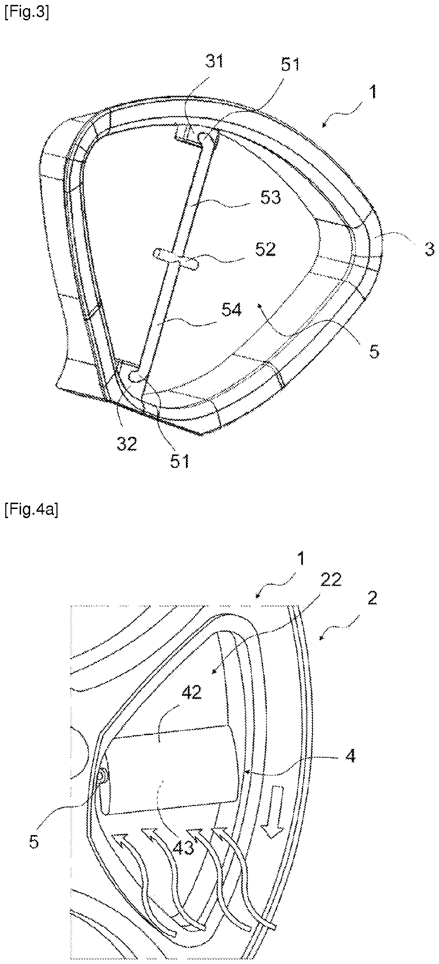

Sur la figure 3 est représentée une vue en perspective du cadre 3 et du support 5 de l'insert 1 où est plus particulièrement visible la forme du support 5.

Les deux extrémités 51 du support 5 sont rigidement solidarisées sur deux plots solidaires du cadre 3.

La partie centrale 52 du support 5 présente une forme en croix pour entrainer en rotation la pale lors de sa rotation.

Le support 5 comporte une première partie 53 qui s'étend de la partie centrale 52 du support 5 vers un premier 31 des deux plots du cadre 3 et une seconde partie 54 qui s'étend de la partie centrale 52 du support 5 vers un second 32 des deux plots du cadre 3.

Le premier plot 31 du cadre 3 est destiné à être positionné au plus proche du bord périphérique de la roue alors que le second plot 32 du cadre 3 est destiné à être positionné au plus proche du centre de la roue.

Le support 5 comporte une structure métallique à mémoire de forme qui présente la particularité que, lorsqu'une partie du support 5 est déformée à basse température, cette partie revient dans son état initial après avoir été exposée à une température critique prédéterminée qui est ici comprise entre 50°C et 70°C, avantageusement cette température critique étant ici de 60°C.

La première partie 53 du support 5 a été préalablement déformée et réagit lorsque la température limite est atteinte, retrouvant sa forme d'avant déformation.

La seconde partie 54 du support 5 n'a pas été préalablement déformée et ne réagit donc pas lorsque la température limite est atteinte.

Sous l'action de la première partie 53 du support 5, une fois la température critique d'atteinte et de dépassée, la partie centrale 52 du support 5 va pivoter sur elle-même entrainant en rotation la seconde partie 54 du support 5.

Lorsque la température baisse en dessous de la température critique, la première partie 53 du support 5 revient dans son état déformé aidé en cela par la seconde partie 54 qui agit comme un ressort de torsion, aidant ainsi au retour à la position initiale de la partie centrale 52 du support 5.

Dans le cas d'un tel insert 1, la modification de la température est essentiellement dû à la température du système de freinage qui est positionné dans la roue.

La température crée par le système de freinage chauffe davantage le bord périphérique extérieur de la roue que son centre, faisant que la première partie 53 du support 5 est préférentiellement positionnée au plus proche du bord périphérique de la roue pour réagir plus vite son augmentation de température.

Sous l'action de la première partie 53 et de la seconde partie 54, la partie centrale 52 du support 5 peut avoir une rotation de 30° en fonction de la température du système de freinage.

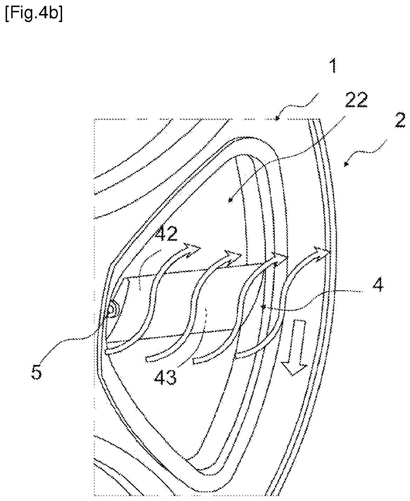

Sur les figures 4a et 4b est représenté un des inserts 1 avec deux orientations différentes de la partie centrale du support 5 et de la pale 4 correspondante.

La figure 4a correspond au support 5 pour des températures inférieures à la température critique où le support 5 conserve sa déformation initiale.

Dans cette première position la pale 4 crée une aspiration de l'air présente à l'extérieur du véhicule vers l'intérieur de la roue 2 au travers des ouvertures 22.

D'un point de vu efficacité aérodynamique, cette première position diminue la trainée aérodynamique du véhicule, mais crée un moindre refroidissement du système de freinage du véhicule.

La figure 4b correspond au support 5 pour des températures supérieures à la température critique où le support 5 se déforme sous l'action de la chaleur pour retrouver sa forme sans sa déformation initiale.

Dans cette deuxième position la pale 4 forme un extracteur d'air, l'air étant pulsé de l'intérieur de la roue 2 vers l'extérieur et l'air circulant le long de la carrosserie et se prolongeant le long de la roue 2 ne pouvant rentrer dans les ouvertures 22.

D'un point de vu efficacité aérodynamique, cette deuxième position augmente la trainée aérodynamique du véhicule, mais participe au refroidissement du système de freinage du véhicule.

Pour une meilleure efficacité des pales 4, celles-ci ont un profil aérodynamique avec une face extérieure 42 généralement bombée et convexe, et une face intérieure 43, opposée à la face extérieure 42, qui est avantageusement plane, convexe ou concave.

Un tel profil est connu sous le nom de « CLARK Y » et se retrouve en particulier dans le profil des ailes d'avion.

De telles inserts 1 permettent un gain aérodynamique de 3 dm2 soit d'environ 1,5 g de CO2 au kilomètre et une diminution de la température du liquide du dispositif de freinage de l'ordre de -10°C.

Cette invention présente en outre l'avantage d'être de conception simple, de faible encombrement et aisée à mettre en oeuvre.

Cette invention peut aussi être appliquée sur un enjoliveur qui recouvrerait l'ensemble du voile de la roue et qui comporterait une série de pales montées pivotantes avec des tels supports dans des ouvertures qui seraient en correspondance avec des ouvertures formées dans le voile de la roue.

## Revendications

1. Insert (1) pour une roue (2) d'un véhicule automobile, comprenant un cadre (3) destiné à être solidarisé dans une ouverture (22) du voile (21) de la roue (2) et au moins une pale (4) liée au cadre (3), la pale (4) étant montée pivotante sur le cadre (3) au moyen d'un support (5) métallique à mémoire de forme configuré pour modifier l'orientation de ladite pale (4) à partir d'une température critique prédéterminée, ladite pale (4) et ledit support (5) étant positionnés sur le cadre (3) de telle sort à s'étend et à avoir un pivotement qui est orienté suivant une direction radiale du voile (21) de la roue (2) lorsque le dispositif est solidarisé dans ladite ouverture (22), **caractérisé en ce que** les deux extrémités (51) du support (5) sont solidaires du cadre (3), s'étendant de part et d'autre de la pale (4) et **en ce qu'**une partie centrale (52) du support (5) est solidaire en rotation de la pale (4).

2. Insert (1) selon la revendication 1, **caractérisé en ce que** le support (5) comporte une première partie (53) préalablement déformée et adaptée pour reprendre sa forme d'origine une fois ladite température critique est atteinte et une seconde partie (54) configurée pour former un ressort de rappel s'opposant à la remise à sa forme initiale de la première partie (53) une fois la température critique est atteinte.

3. Insert (1) selon la revendication 2, **caractérisé en ce que** la seconde partie (54) du support (5) forme une barre de torsion.

4. Insert (1) selon l'une quelconque des revendications précédentes, **caractérisé en ce que**, lorsque l'insert (1) est en rotation suivant la marche avant du véhicule, le support (5) est configuré pour que, lorsque la température est inférieure à la température critique, orienter la pale (4) de manière à générer un flux d'air dirigé de l'extérieure de la roue (2) vers l'intérieur de la roue (2) et pour une température supérieure ou égale à la température critique, orienter la pale (4) de manière générer un flux d'air inverse.

5. Insert (1) selon l'une quelconque des revendications précédentes, **caractérisé en ce que** la température critique est comprise entre 50°C et 70°C, ladite température critique étant préférentiellement de 60°C.

6. Roue (2) de véhicule comportant plusieurs ouvertures (22), chaque ouverture comportant un insert (1) selon l'une quelconque des revendications précédentes.

7. Véhicule automobile comprenant plusieurs roues (2), chacune desdites roues (2) étant selon la revendication précédente.

## Patentansprüche

1. Einsatz (1) für ein Rad (2) eines Kraftfahrzeuges, umfassend einen Rahmen (3), der dazu bestimmt ist, in einer Öffnung (22) des Segels (21) des Rades (2) befestigt zu werden, und mindestens ein Blatt (4), das mit dem Rahmen (3) verbunden ist, wobei das Blatt (4) mittels eines formgedächtnismetallischen Trägers (5), der so konfiguriert ist, dass er die Orientierung des Blattes (4) von einer vorbestimmten kritischen Temperatur verändert, schwenkbar an dem Rahmen (3) angebracht ist, wobei das Blatt (4) und der Träger (5) sich derart erstrecken und haben Schwenken, das in einer radialen Richtung des Segels (21) des Rades (2) ausgerichtet ist, wenn die Vorrichtung in der Öffnung (22) fest verbunden ist, **dadurch gekennzeichnet, dass** die beiden Enden (51) des Trägers (5) fest mit dem Rahmen (3) verbunden sind, der sich beiderseits des Blattes (4) erstreckt, und dass ein zentraler Teil (52) des Trägers (5) drehfest mit dem Blatt (4) verbunden ist.

2. Einsatz (1) nach Anspruch 1, **dadurch gekennzeichnet, dass** der Träger (5) einen ersten Abschnitt (53) aufweist, der vorverformt und angepasst ist, um seine ursprüngliche Form wiederherzustellen, wenn die kritische Temperatur erreicht ist, und einen zweiten Abschnitt (54), der konfiguriert ist, um eine Rückstellfeder zu bilden, die der Wiederherstellung der ursprünglichen Form des ersten Abschnitts (53) entgegenwirkt, wenn die kritische Temperatur erreicht ist.

3. Einsatz (1) nach Anspruch 2, **dadurch gekennzeichnet, dass** der zweite Teil (54) des Trägers (5) einen Torsionsstab bildet.

4. Einsatz (1) nach einem der vorhergehenden Ansprüche, **dadurch gekennzeichnet, dass**, wenn der Einsatz (1) sich in der Vorwärtsbewegung des Fahrzeugs dreht, der Träger (5) so konfiguriert ist, dass, wenn die Temperatur unter der kritischen Temperatur liegt, die Schaufel (4) so ausgerichtet wird, dass ein Luftstrom erzeugt wird, der von der Außenseite des Rades (2) in das Innere des Rades (2) gerichtet ist, und bei einer Temperatur, die größer oder gleich der kritischen Temperatur ist, die Schaufel (4) so ausgerichtet wird, dass ein umgekehrter Luftstrom erzeugt wird.

5. Einsatz (1) nach einem der vorhergehenden Ansprüche, **dadurch gekennzeichnet, dass** die kritische Temperatur zwischen 50 °C und 70 °C liegt, wobei die kritische Temperatur vorzugsweise 60 °C beträgt.

6. Fahrzeugrad (2) mit einer Vielzahl von Öffnungen (22), wobei jede Öffnung einen Einsatz (1) nach einem der vorhergehenden Ansprüche aufweist.

7. Kraftfahrzeug mit einer Vielzahl von Rädern (2), wobei jedes der Räder (2) nach dem vorhergehenden Anspruch ausgebildet ist.

## Claims

1. Insert (1) for a wheel (2) of a motor vehicle, comprising a frame (3) intended to be secured in an opening (22) of the web (21) of the wheel (2) and at least one blade (4) connected to the frame (3), the blade (4) being pivotally mounted on the frame (3) by means of a shape-memory metal support (5) configured to modify the orientation of said blade (4) from a predetermined critical temperature, said blade (4) and said support (5) being positioned on the frame (3) so as to extend and have a pivoting which is oriented in a radial direction of the web (21) of the wheel (2) when the device is secured in said opening (22), **characterized in that** the two ends (51) of the support (5) are secured to the frame (3), extending on either side of the blade (4) and **in that** a central part (52) of the support (5) is secured in rotation to the blade (4).

2. Insert (1) according to claim 1, **characterized in that** the support (5) comprises a first part (53) previously deformed and adapted to return to its original shape once said critical temperature has been reached and a second part (54) configured to form a return spring opposing the return of the first part (53) to its initial shape once the critical temperature has been reached.

3. Insert (1) according to claim 2, **characterized in that** the second part (54) of the support (5) forms a torsion bar.

4. Insert (1) according to any one of the preceding claims, **characterized in that**, when the insert (1) is rotating in the forward direction of the vehicle, the support (5) is configured so that, when the temperature is below the critical temperature, orienting the blade (4) so as to generate a flow of air directed from the outside of the wheel (2) towards the inside of the wheel (2) and, for a temperature greater than or equal to the critical temperature, orienting the blade (4) so as to generate a reverse flow of air.

5. Insert (1) according to any one of the preceding claims, **characterized in that** the critical temperature is between 50° C and 70° C, the said critical temperature preferably being 60° C.

6. A vehicle wheel (2) comprising a plurality of openings (22), each opening comprising an insert (1) according to any one of the preceding claims.

7. Motor vehicle comprising several wheels (2), each of said wheels (2) being according to the preceding claim.
